# EUROPEAN PATENT APPLICATION

(11) **EP 2 432 081 A1**
(43) Date of publication of application: **21.03.2012**
(21) Application number: 11178978.0
(22) Date of filing: 26.08.2011
(51) Int. Cl.: H01R 43/24, H01R 107/00, H01R 13/504, H01R 13/52, H01R 13/405, H01R 13/74, H01Q 1/24

(54) **Multi-shot connector assembly and method of manufacture**

(30) Priority: 15.09.2010 US 882242
(71) Applicant: Andrew LLC, Hickory, NC 28602 (US)
(72) Inventor: Van Swearingen, Kendrick, Woodridge, IL Illinois 60517 (US); Le, Quoc M, PLANO, TX Texas 75094 (US); Schmutzler, Steve, Glen, IL Illinois 60491 (US)
(74) Representative: Nilsson, Lars-Magnus

(57) **Abstract**

A coaxial cable connector formed via multi-shot injection molding has a body formed by multiple injection molding layers of different injection moldable materials about a central inner contact to form an integral connector body. The connector body is provided with a coaxial dielectric spacer of dielectric polymer surrounding the inner contact; a coaxial inner body of injection molded metal composition surrounding an outer diameter of the dielectric spacer; and an outer body of polymer surrounding the inner body. Interlock features provide axial and/or rotational interlock between the layers of the connector.

## Description

### Cross Reference to Related Applications

This application is claims the benefit of a commonly owned co-pending US Utility Patent Application Serial No. 12/882,242, titled "Multi-shot Coaxial Connector and Method of Manufacture", filed September 15, 2010 by Kendrick Van Swearingen, Quoc M Le and Steve Schmutzler.

### BACKGROUND OF THE INVENTION

### Field of the Invention

The invention relates to an electrical connector. More particularly the invention relates to a lightweight and cost efficient electrical connector assembly with significant material and manufacturing efficiencies realized by application of multi-shot injection molding technology.

### Description of Related Art

Electrical connectors are typically manufactured via precision machining of a plurality of metal and dielectric elements that are then assembled to form the connector assembly.

Machining of metal elements from metal bar stock typically results in significant material waste and requires sophisticated high precision machining / turning equipment and skilled operators for same.

A previous application of polymeric materials to a coaxial connector for use with helical corrugated solid outer conductor coaxial cable is disclosed in US 5354217, issued October 11, 1994 to Gabel et al. Polymeric materials are applied to both the connector body and a clamp nut, requiring multiple machined internal conductive elements to form a conductive path for the outer conductor across the connector. However, the separate metal and polymeric elements must each be separately formed, any flashing removed or other rework performed and each of the separate elements assembled together by labor intensive press fit and/or hand assembly operations to complete the connector assembly. Manufacture, quality control, inventory and delivery coordination to the assembly area of each of the plurality of separate elements is a significant additional manufacturing cost. Further, a problem resulting in a delivery delay of any one of the multiple separate elements and or damage or loss during field assembly renders the remainder of the connector inoperable.

In US5354217, the clamp nut threads upon helical corrugations of the outer conductor and the leading edge of the outer conductor is then manually precision-flared against the clamp nut prior to connector assembly. Therefore, the connector is incompatible with smooth or annular corrugated solid outer conductor coaxial cable, is expensive to manufacture and time consuming to install.

Electrical connectors interconnecting RF equipment such as antennas may include multiple conductors and/or connectors. Each of the connectors may be mounted to a base, backplane, enclosure or other flange surface of the antenna as a communications, power and/or control electrical cable interconnection. The mounting of the connectors upon holes formed in the base or other flange may require tool access to both sides of the mounting point, creating an overall increase in the antenna size, complicating assembly and/or introducing additional environmental sealing issues.

Competition within the cable and connector industry has increased the importance of minimizing connector weight, installation time, materials waste, overall number of discrete connector parts and connector manufacturing/materials costs. Also, competition has focused attention upon ease of use, electrical interconnection quality and connector reliability.

Therefore, it is an object of the invention to provide an electrical connector and method of manufacture that overcomes deficiencies in such prior art.

### BRIEF DESCRIPTION OF THE DRAWINGS

The accompanying drawings, which are incorporated in and constitute a part of this specification, illustrate an embodiment of the invention, together with a general description of the invention given above, and the detailed description of the embodiments given below, serve to explain the principles of the invention. Like reference numbers in the drawing figures refer to the same feature or element and may not be described in detail for every drawing figure in which they appear.
Figure 1 is a schematic cut-away side view of a first exemplary embodiment.
Figure 2 is a schematic isometric exploded cut-away side view of Figure 1.
Figure 3 is a schematic cut-away side view of a second exemplary embodiment.
Figure 4 is a schematic isometric exploded cut-away side view of Figure 3.
Figure 5 is a schematic cut-away side view of the conductive sleeve and inner contact of Figure 1, positioned for injection molding of the dielectric spacer.
Figure 6 is a schematic cut-away side view of the conductive sleeve, inner contact and dielectric spacer of Figure 1.
Figure 7 is a schematic cut-away side view of the multi-shot connector body of Figure 1.
Figure 8 is a schematic cut-away side view of the slip ring mating surface of Figure 1.
Figure 9 is a schematic cut-away side view of the slip ring of Figure 1.
Figure 10 is a schematic cut-away side view of the coupling body of Figure 1.
Figure 11 is a schematic cut-away side view of the coupling body of Figure 1, including an in-situ formed sheath gasket.
Figure 12 is a schematic isometric exploded cut-away side view of a further exemplary embodiment of a connector body.
Figure 13 is a schematic isometric external partial cut-away view of the connector body of Figure 12.
Figure 14 is a schematic isometric exploded cut-away side view of an exemplary connector with the connector body of Figure 12.
Figure 15 is a schematic isometric exploded cut-away side view of an exemplary panel mount connector.
Figure 16 is a schematic side view of the panel mount connector of Figure 15.
Figure 17 is a schematic close-up view of area F of Figure 16.
Figure 18 a schematic isometric angled view of an exemplary embodiment of a multi-connector assembly.
Figure 19 is a schematic side view of the multi-connector assembly of Figure 19 demonstrated assembled within an exemplary cellular base station antenna.
Figure 20 is a schematic isometric exploded view of Figure 18
Figure 21 is a schematic partial cut-away top view of the inner body of Figure 18.
Figure 22 is a close-up view of a male connector portion of the multi-connector assembly of Figure 21.
Figure 23 is a close-up view of the female connector portion of the multi-shot connector assembly of Figure 21.
Figure 24 is a close-up view of a male connector portion of the multi-connector assembly of Figure 21, demonstrating the position of male pins prior to injection molding of the male insulator in-situ.
Figure 25 is a close-up view of a female connector portion of the multi-connector assembly of Figure 21, demonstrating the position of female pins prior to injection molding of the female insulator in-situ.
Figure 26 is a close-up view of a male connector portion of the multi-connector assembly of Figure 21, demonstrating the result of injection molding of the male insulator in-situ.
Figure 27 is a close-up view of a female connector portion of the multi-connector assembly of Figure 21, demonstrating the result of injection molding of the female insulator in-situ.
Figure 28 is a schematic front view of the multi-connector assembly of Figure 18.

### DETAILED DESCRIPTION

The inventor has recognized that injection moldable metal compositions, usable with conventional polymeric injection molding equipment, enables manufacture of multi-shot combination metal and polymeric material electrical connector assemblies. Thereby, numerous manufacturing steps and the prior need for additional seals between separate elements may be eliminated to realize a significant materials and manufacturing cost savings.

An example of an injection moldable metal composition is "Xyloy" TM M950 available from Cool Poly, Inc. of Warwick, RI, US. "Xyloy" TM M950 comprises an aluminum and zinc composition delivered in pellet form to injection molding equipment in the same manner as raw polymer pellets. Because the melting point of zinc is comparatively low, a combination of aluminum and zinc results in an alloy with a low enough melting point and viscosity characteristics suitable for use in polymeric injection molding machines without requiring any modification thereto. Other suitable injection moldable metal compositions preferably have melting points and viscosity characteristics that similarly enable use of conventional polymeric injection molding equipment with maximum operating temperatures around 1100 degrees Fahrenheit. Injection moldable metal compositions as described herein above do not require specialized metal injection molding "MIM" equipment, which relies upon application of higher temperatures and/or pressure incompatible with traditional injection moldable polymers to fluidize a metal alloy, such as thixotropic magnesium alloy(s).

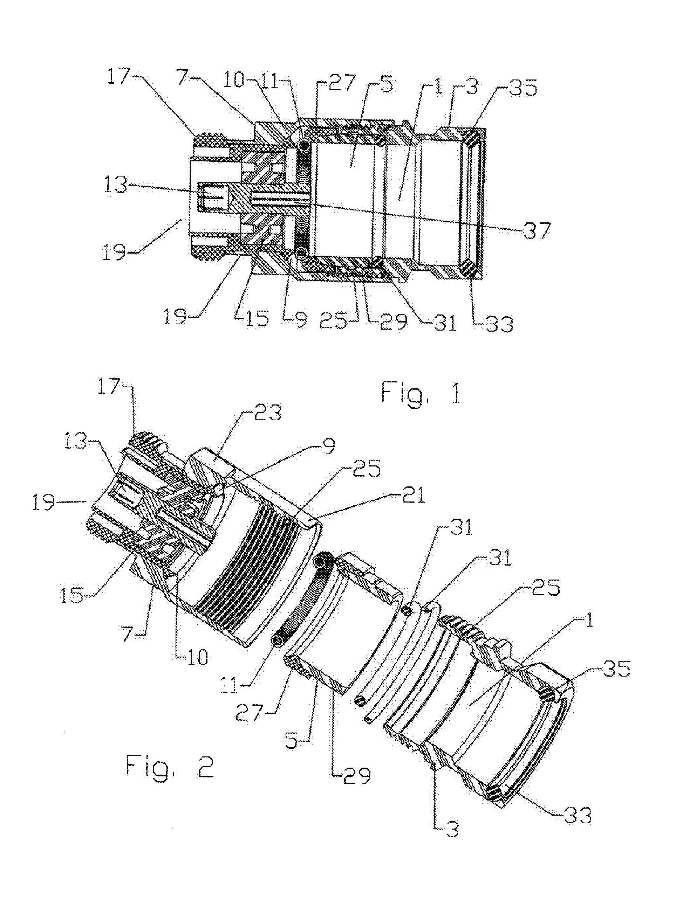

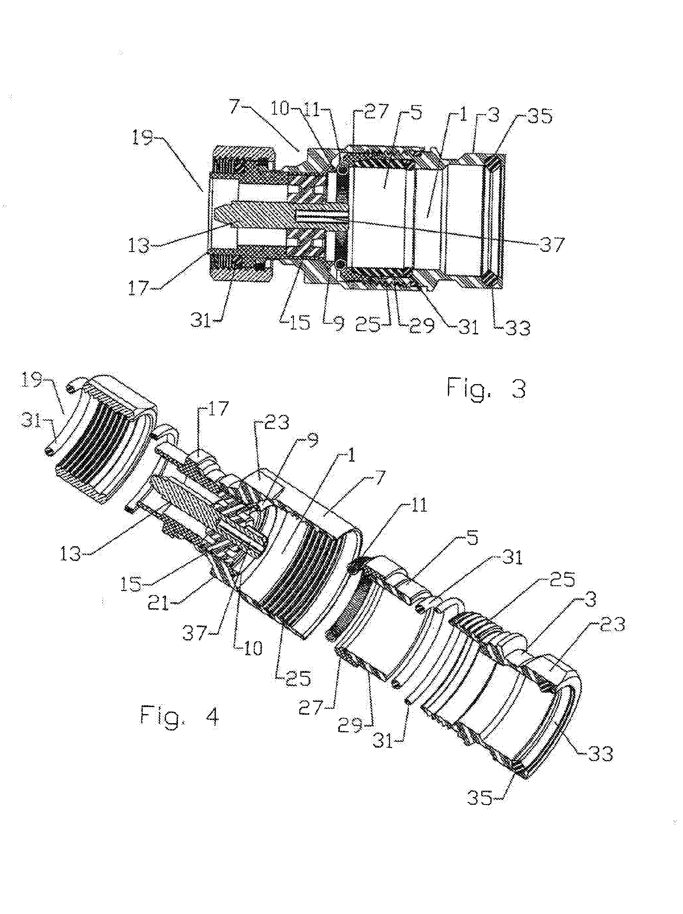

In the exemplary embodiments demonstrated in Figures 1-14, an electrical connector is configured for use with annular corrugated outer conductor coaxial cable (not shown). The cable is received through a bore 1 of a coupling body 3, a slip ring 5 and the connector body 7. A leading edge of the outer conductor is retained clamped between an annular ramp surface 9 formed on an end face 10 of an inner body 17 of the connector body 7 and a clamp spring 11, such as a canted coil spring. The clamp spring 11 is pressed against the outer surface of the leading edge by the slip ring 5 driven by the coupling body 3. The slip ring 5 is rotatable independent of the coupling body 3, to minimize the chance for damage to the clamp spring 11 during rotation of the coupling body 3 to thread the coupling body 3 upon the connector body 7, thus applying the clamping force to the leading edge of the outer conductor. An inner conductor of the coaxial cable is received into an inner contact 13 held coaxial within the bore 1 by a dielectric insulator 15.

To minimize metal material costs and the overall weight of the connector, a metal inner body 17 is provided as an outer conductor conductive path between the annular ramp surface 9 and the connection interface 19. A polymeric outer body 21 surrounds the inner body 17 and may include, for example, tool flats 23 for use during connector assembly and or mating threads 25 for the coupling body 3.

The slip ring 5 spring mating surface 27 with the clamp spring 11 may be formed of metal, to avoid polymeric material creep that may occur over time which could prevent easy separation of the clamp spring 11 from the split ring 5 when removed, for example, for periodic inspections of the cable and connector interconnection. A cylindrical slip ring body 29 that maintains coaxial alignment of the slip ring 5 with the coaxial cable may be formed from polymeric material.

Because it is outside of the electrical path, the coupling body 3 may be formed entirely from polymeric material.

Environmental sealing of the connector may be improved by applying environmental seal(s) 31 such as gasket(s) and/or o-rings between the outer conductor and the connector, for example positioned between the slip ring 5 and the coupling body 3 and/or between the connector body 7 and the coupling body 3. A further sheath seal 33, sealing between the coupling body 3 and an outer sheath of the cable may be formed in place upon an outer surface of the coupling body 3 bore 1, for example molded into an annular groove 35. Compared to a conventional o-ring type seal inserted into an annular groove 35, an environmental seal formed in place has a significantly reduced chance for failure and/or assembly omission/error, as the potential leak path between the o-ring and the annular groove 35 and the potential for o-ring slippage out of the annular groove 35 is eliminated.

Although the inner contact 13 may be similarly manufactured by molding, a conventionally machined inner contact 13 is preferred to enable use of beryllium copper and or phosphor bronze alloys with suitable mechanical characteristics for spring finger and/or spring basket 37 features of the inner contact 13 that receive and retain the inner conductor of the cable and/or of the inner conductor mating portions of the mating connector at the connection interface 19.

As used herein, multi-shot injection molding is understood to be an injection molding manufacturing procedure wherein additional layers are injection molded upon a base element and/or prior injection molded layers. Preferably, the portion undergoing molding need not be fully released from the mold. Instead, the portion may be retained aligned within the mold nest and only portions of the mold as required to define a further cavity to be injection molded with material are reconfigured. The resulting element is permanently integrated without any mechanical coupling mechanisms, fasteners or assembly requirements. By changing the injection material between metal, dielectric polymer and structural polymers an integral connector element is obtained that is fully assembled upon application of the last layer.

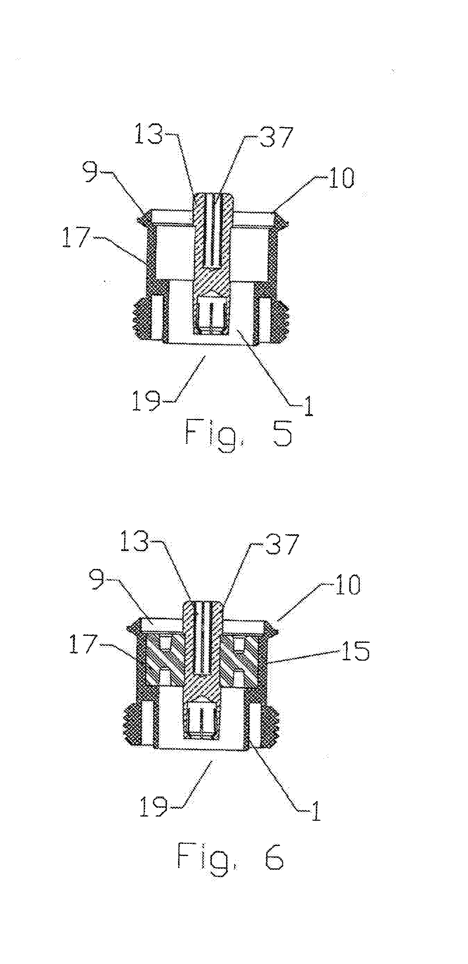

In an exemplary method for manufacturing the connector body 7 via multi-shot injection molding, a mold for the conductive sleeve is injected with the injection moldable metal composition, forming the inner body 17 conductive sleeve. An inner portion of the mold is removed and the inner contact 13 positioned therein as shown for example in Figure 5. Alternatively, the inner contact 13 may be positioned first, and mold portions nested thereupon using the inner contact 13 as an alignment element for the various molding operations.

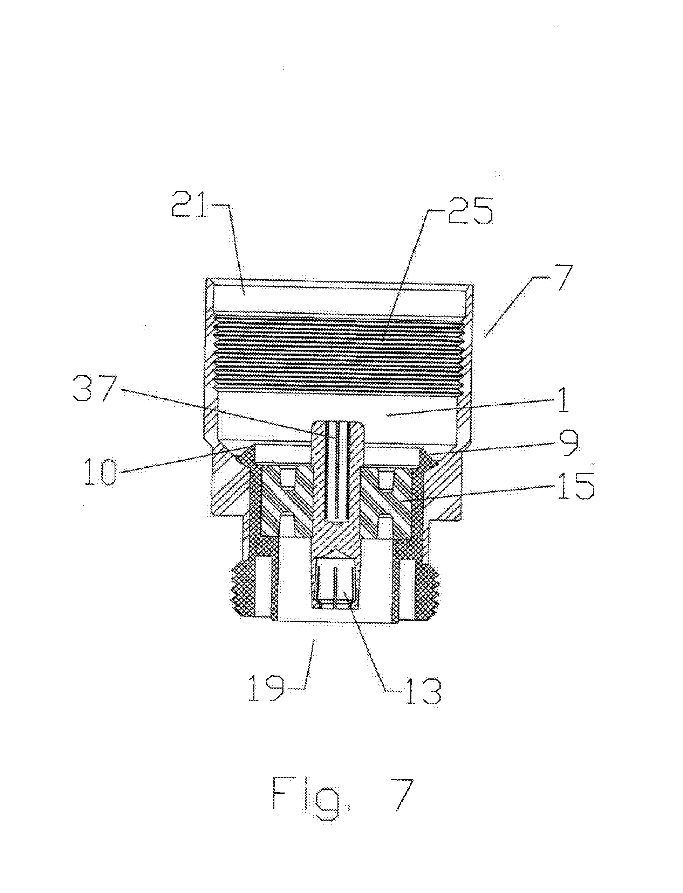

A space between the inner contact 13 and the inner body 17 is then injected with a dielectric polymer to form the dielectric insulator 15 in-situ as shown in Figure 6. The inner body 17 is also positioned as the core for a molding step wherein a polymer is injected to form the outer body 21 in situ as shown in Figure 7.

The order of molding is preferably arranged based upon the melting point of the various materials applied with the injection moldable metal composition typically being first, the dielectric polymer second and the outer body 21 polymer last.

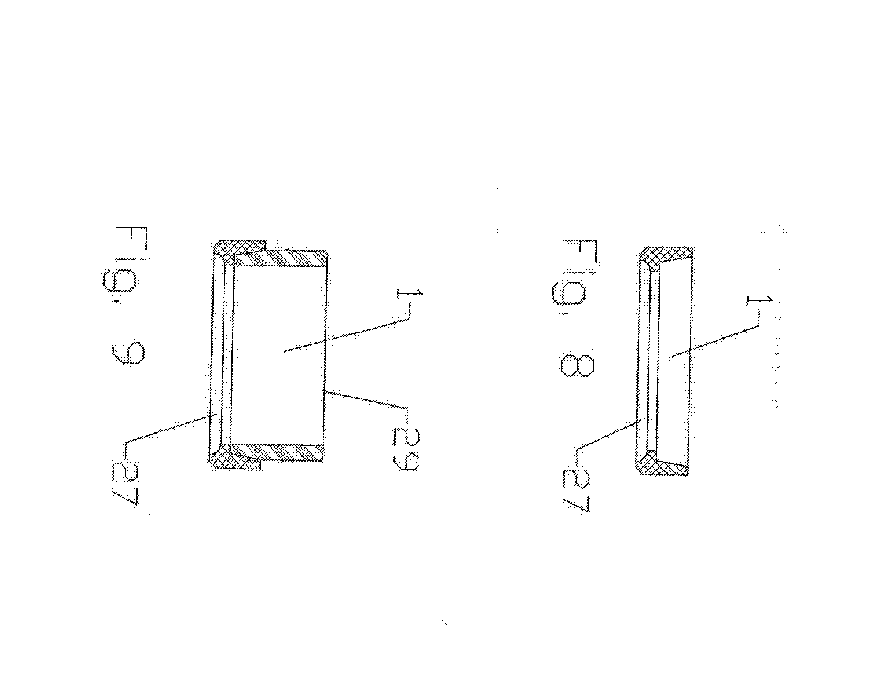

The slip ring mating surface 27, as shown in Figure 8, may be similarly formed by injecting the injection moldable metal composition into a slip ring mating surface mold, then, if desired, replacing a portion of the mold to form an adjacent cavity for injection of polymeric material to form the slip ring body 29 integral with the slip ring mating surface 27 as shown in Figure 9.

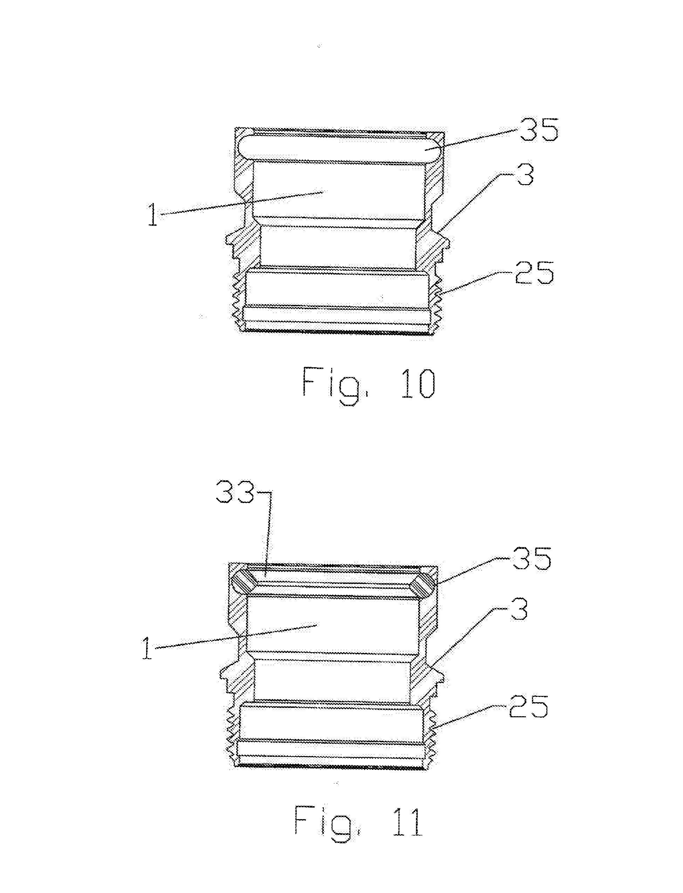

The coupling body 3, as shown in Figure 10, may be formed by injecting a polymer into a coupling body mold. If desired, the coupling body mold may be opened and portions exchanged to form a sheath seal cavity that is then injected with a polymeric gasket material to form the sheath seal 33 in-situ, as shown in Figure 11.

Thereby, the connector is formed in only three main elements that are easily assembled with the desired environmental seal(s) 31, clamp spring 11 and any further connection interface 19 portions to form the connector.

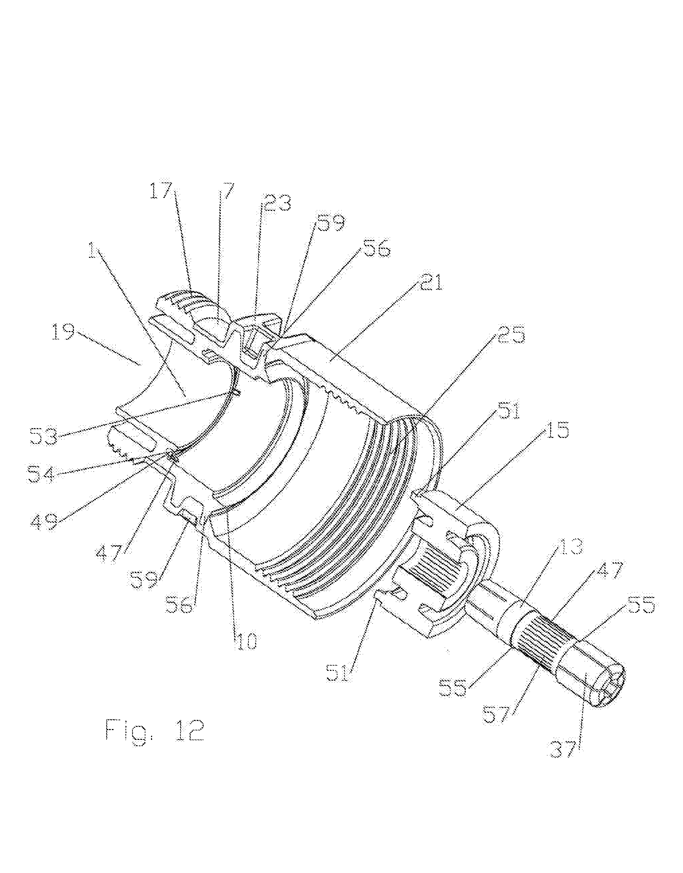

As shown in Figures 12 - 14, the connector configuration may be further enhanced, for example with respect to connector layer interlocking, environmental sealing, material requirement reduction and/or tool flat 23 integrity.

Connector layer interlocking may be applied to ensure that the various layers of the connector remain interlocked, for example as significant rotational and/or axial forces are applied during connector to cable and/or connector to connector assembly. Although the direct molding of the layers upon one another and/or shrinkage characteristic differentials of the selected materials may provide a significant layer interlock, further interlocking may be applied via application of interlock feature(s) 47, for example as groove(s) 49 and/or ridges on the inner contact 13 and/or the inner diameter of the inner body 17.

To take advantage of shrinkage characteristic differentials between materials during molding, for example between the dielectric insulator 15 and the inner body 17, the interlock feature 47 may be provided, for example, as a groove 49 of the inner body 17 that mates with a lip 51 of the dielectric insulator 15, as best shown in Figure 12. As the last molded layer is applied, any shrinkage characteristic differential between the metal and the polymer material will act upon the periphery of the groove 49 and/or lip 51, increasing the connector layer interlocking and also providing a continuous radial environmental seal between these layers.

Further interlock feature(s) 47 may be applied as protrusion(s) 53 for improved rotational interlock. Where the protrusion(s) 53 are positioned proximate a mold break point 54, protrusion(s) 53 that would require significant additional machining in a conventional connector manufacture procedure may be easily applied.

Connector layer interlocking between the dielectric insulator 15 and the inner contact 13 may be applied, for example, as shoulder(s) 55 between which the dielectric insulator 15 is molded for axial interlocking and as axial rib(s) 57 for rotational interlocking.

Improved polymer thickness uniformity may reduce a required set time for the, for example, outer body 21 polymer molding step by minimizing areas of greater than average polymer thickness within the element. Thereby, polymer material requirements and the overall weight of the coaxial connector may be reduced. A primary area of increased material thickness in the outer body 21 is located proximate the tool flat(s) 23. By forming the tool flat(s) 23 with material reduction groove(s) 59 polymer material thickness with respect to the closest external surface may be significantly reduced.

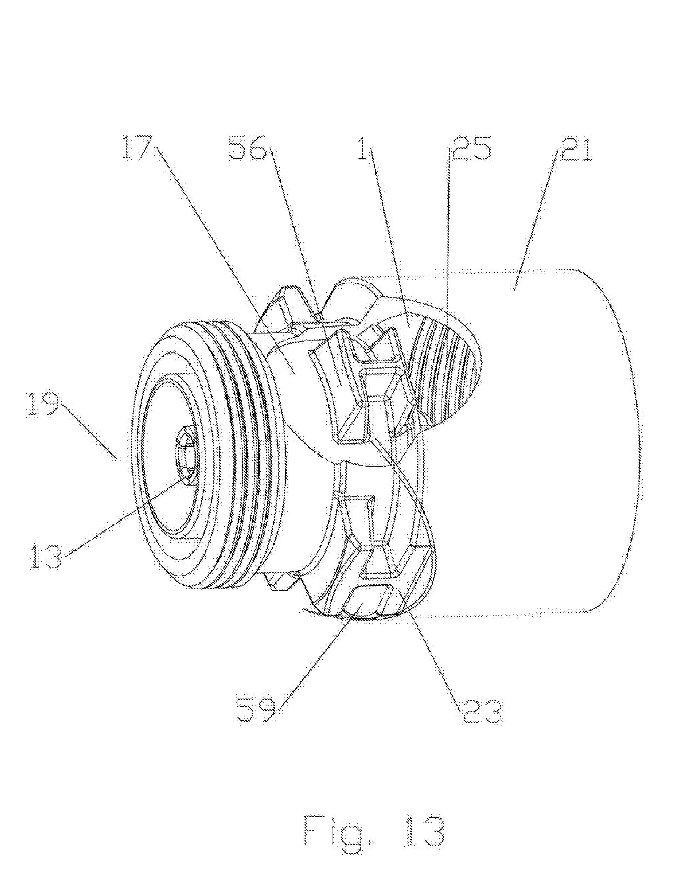

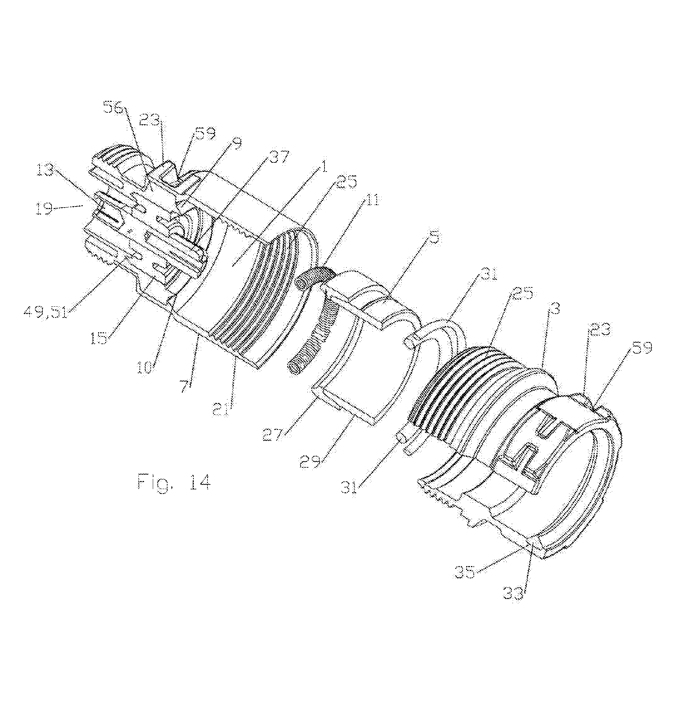

The relatively soft polymer material tool flat(s) 23 of a connector may be damaged by application of wrenches of incorrect size and/or inadequate precision. As best shown in Figure 13, to improve the integrity of the tool flat(s) 23, the inner body 17 may be provided with reinforcing tool flat support(s) 49 around which the tool flat(s) 23 of the outer body 21 may then be further formed during the outer body 21 molding step. The tool flat support(s) 56 also aid in reducing areas of increased material thickness and provide substantial connector layer interlocking as described herein above. As shown in Figure 14, material reduction groove(s) may also be applied to tool flat(s) 23 of the coupling body 23.

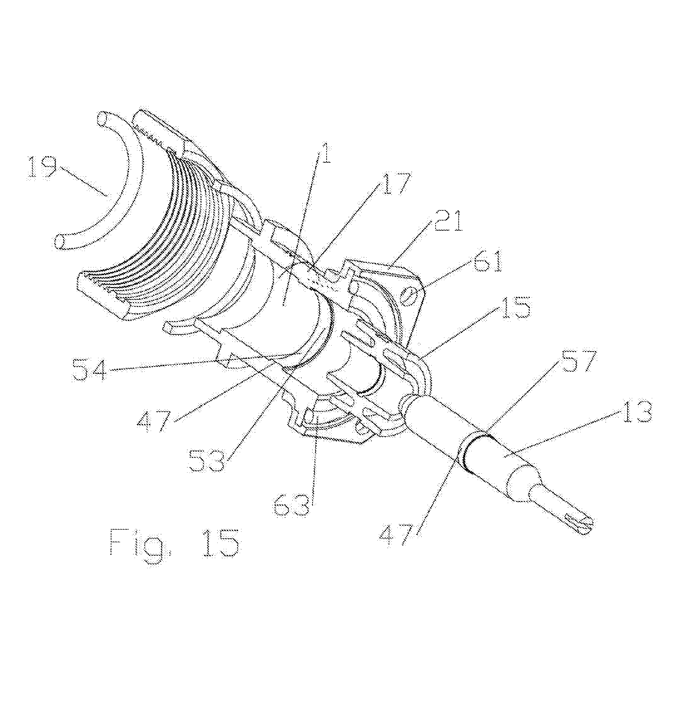

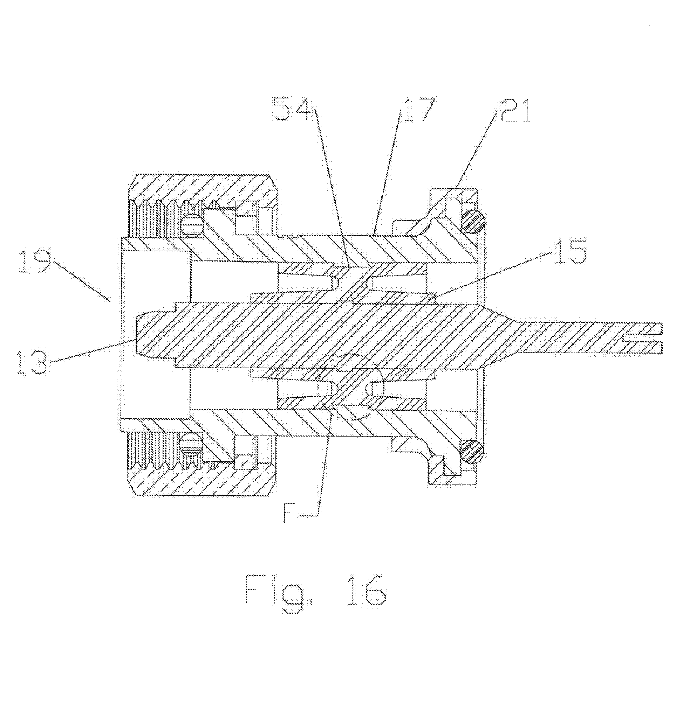

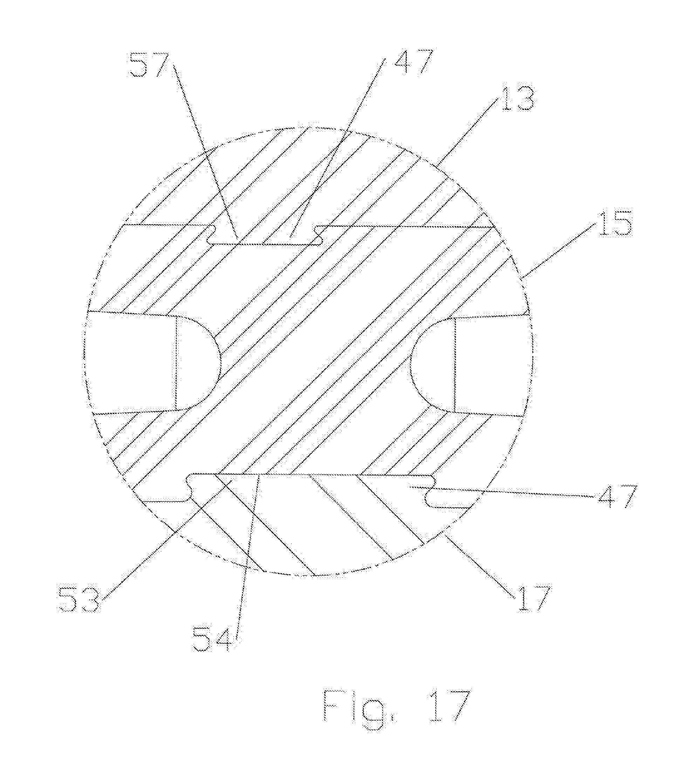

Figures 15-17 demonstrate a multi-shot panel mount coaxial connector embodiment utilizing interlock feature(s) 47 formed as annular protrusion(s) 53 operative as radial, axial and environmental seals. Here, if desired, an outer body 21 of polymeric material may be applied as a galvanic break between the connector and unsealed portions of a panel surface the connector is mounted upon.

In further embodiments, the connector inner body 17 and/or outer body 21 may be applied as a larger structure which has further utility such as providing a single inner body 17 and/or outer body 21 utilized by multiple connectors.

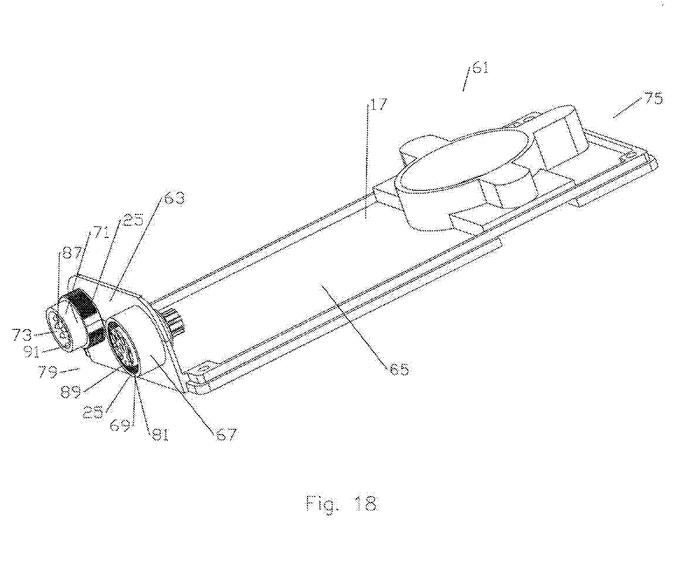

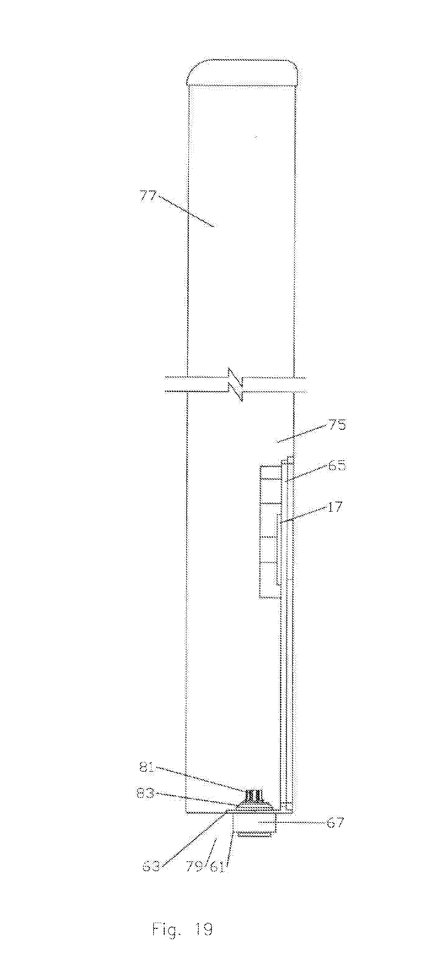

As shown in Figure 18, a multi-connector assembly 61 may be configured as an assembly with a plurality of separate panel mount connectors, here conforming to the male and female eight conductor Antenna Interface Standards Group (AISG) connector interface specification. The single monolithic inner body 17 is provided with a flange portion 63 and a base portion 65. The flange portion 63 is provided with a cylindrical female connector portion 67 with a female bore 69 and a cylindrical male connector portion 71 with a male bore 73. The base portion 65 extends from the flange portion 63 towards a device end 75 of the inner body 17 and is further dimensioned in the present embodiment to provide support and/or sealing functionality operative, for example, to couple as an exterior surface of a cellular base station antenna 77. The multi-connector assembly may close back and/or bottom sides side of the cellular base station antenna 77, as shown in Figure 19. One skilled in the art will appreciate that the flange 63 and/or base portions 65 may each alternatively be dimensioned/configured, within practicalities of mold separation without requiring an unfeasible number of mold portions, for any desired utility, such as an apparatus cover, faceplate and/or support/mounting surface(s) for further devices.

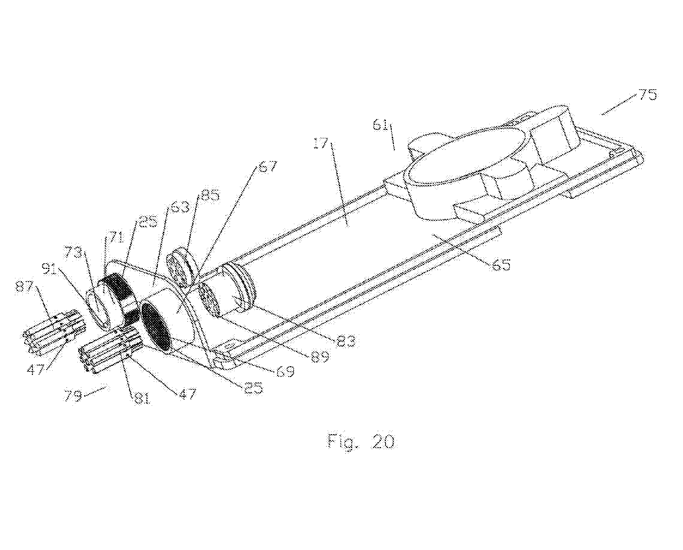

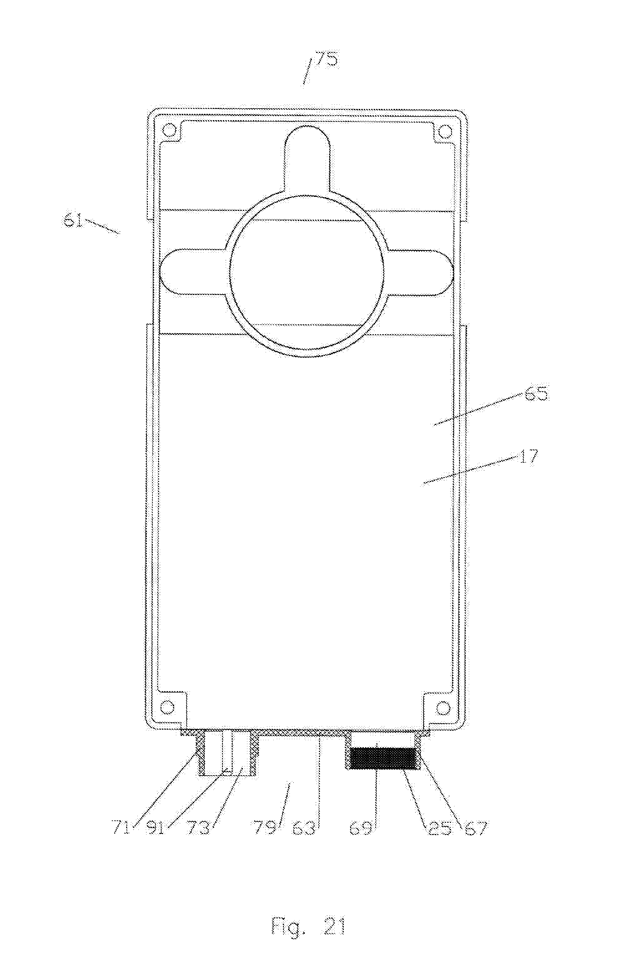

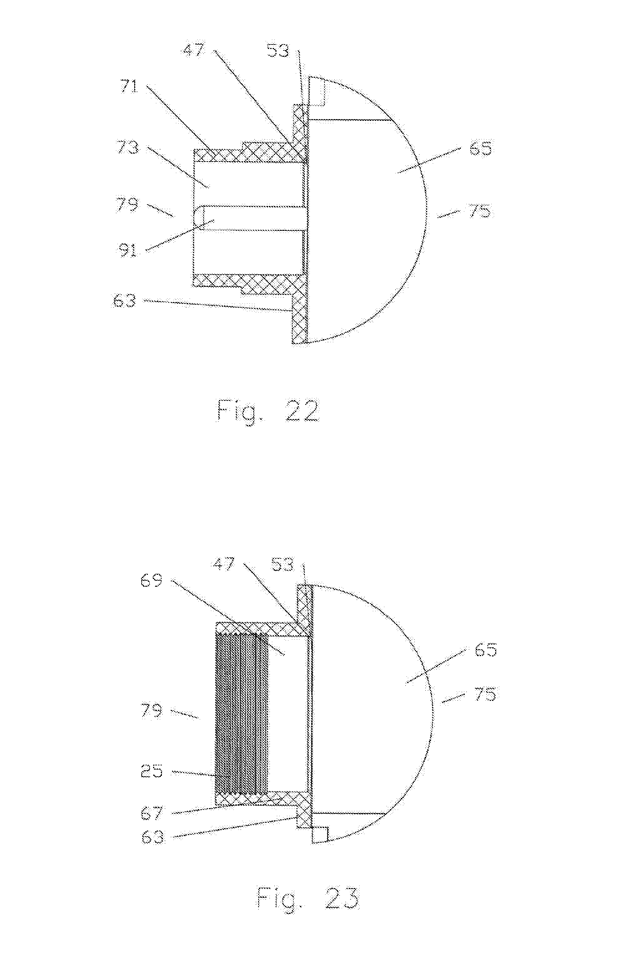

The inner body 17 of the multi-connector assembly 61 may be multi-shot injection molded of metal alloy in an initial molding step with mold portions forming the respective male 73 and female bores 69, best shown in Figures 20-23. Features such as a thread 25 upon an outer diameter of the male connector portion 71 may be adapted for mold separation by applying a cut-away section 93 to a mold joint area of the thread 25 (Figure 20).

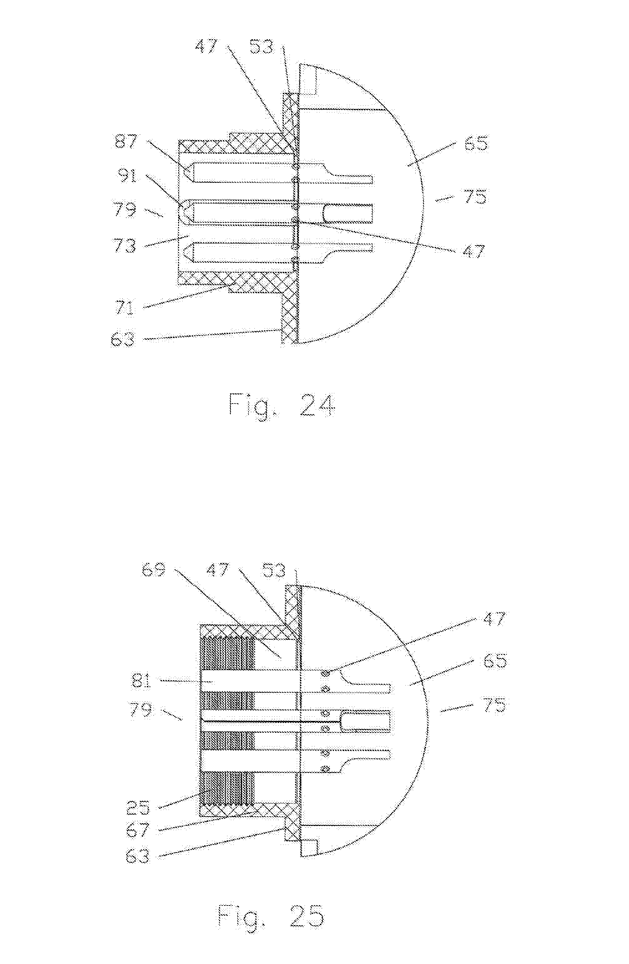

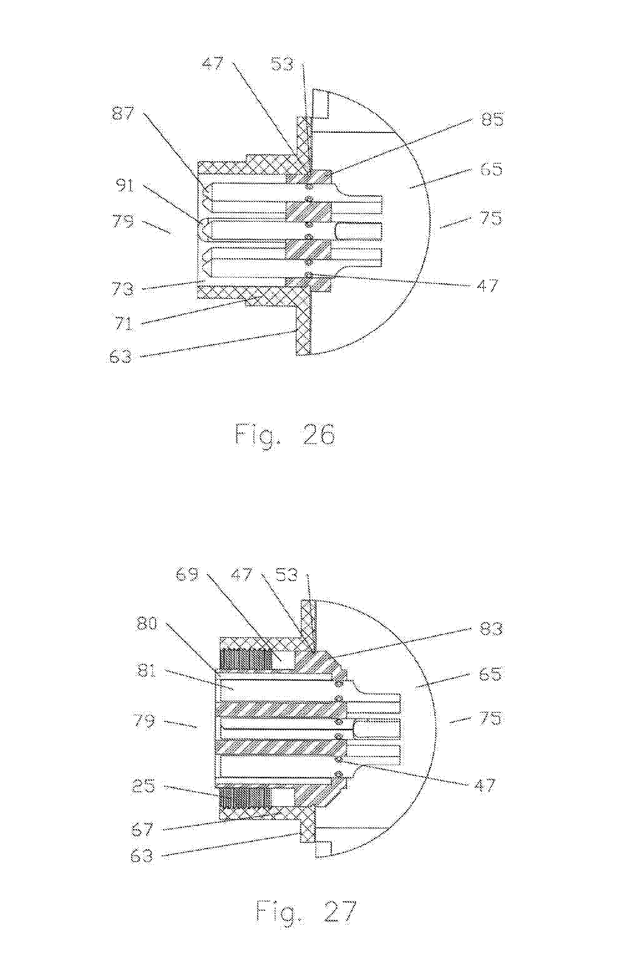

With the male and female pins 87 and 81 suspended by the mold elements within their respective male and female bore(s) 73, 69, for example as shown in Figures 24 and 25, the male and female insulator(s) 85, 83 may be molded in-situ in a further multi-shot molding step. Interlock feature(s) 47 formed as annular protrusion(s) 53 operative as radial, axial and environmental seals enhance the retention of and sealing between the respective insulator and bore, as best shown in Figures 26 and 27. Further, interlock feature(s) 47, such as pin sidewall protrusions and/or cavities, may also be applied to the male and/or female pin(s) 87, 81.

A pin spread space 80 may be applied during molding proximate a connector end 79 of the female pin(s) 81 to leave an area for the female pin(s) 81, open to the connector end, to expand into without interference from the surrounding female insulator 83 during interconnection with a male AISG connector wherein a male pin of the mating connector is inserted within the open end of each female pin 81, slightly expanding the diameter of each female pin 81 in a secure electrical interconnection.

In compliance with an AISG female connector interface, an inner diameter of the female bore 69 is provided with an interior thread 25, formed for example via a threaded mold collar unthreaded or retracted radially inward from the threads formed thereby during mold separation. Further to the AISG connector specification, to avoid the possibility of rotational slipping, and therefore damage to the female pin(s) 81, the female insulator 83 is provided with a key slot 89 extending inward from an outer diameter of the female insulator 83. Similarly, the male connector portion 71 is provided with an exterior thread 25 around an outer diameter of the male connector portion 71, which protrudes from the flange portion 63 towards the connector end 79. To avoid the possibility of rotational slipping, and therefore damage to the male pin(s) 87, the male insulator 85 is further provided with a key 91 protruding inward from an inner diameter of the male bore 73.

Alternatively, the male 85 and female insulators 83 may be formed in the first step around the respective male and female pins 78 and 81 and the inner body 17 injection molded around them in the second molding step.

In further embodiments, for example where electrical isolation is desired between the inner body 17 of each of a plurality of connectors, one skilled in the art will appreciate that a shared outer body of polymeric material may be applied as the flange and base portion(s) 63,65 supporting each of the individual connectors aligned and environmentally sealed as desired.

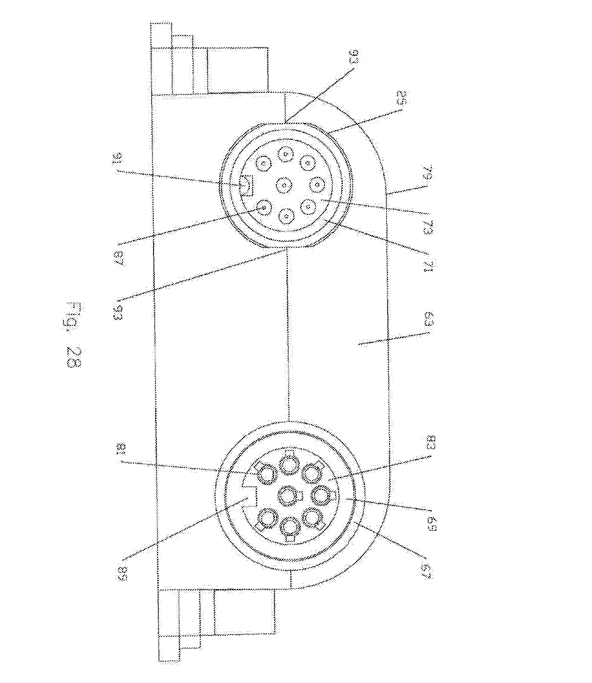

Although the present embodiment is demonstrated with two connectors sharing a common inner body 17, as shown in Figure 28, one skilled in the art will appreciate that the present invention may be similarly applied with any number of connectors sharing a common inner body 17 and/or outer body 21. For example, RF signal connections similar to that of the panel mount connector of Figure 15, herein above, may be added to the flange portion 63 along with power/control connections or the like. For each additional connector added to the common outer body 21, environmental sealing requirements, space requirements for fastener access and the additional installation steps for the typical penetration mounting of a connector within a bulkhead surface are eliminated.

By minimizing the use of metal, and further the possible substitution of reduced cost metal alloys where applicable, the invention may provide a significant materials cost and weight savings. By replacing metal machining with injection molding technology, the number of separate sub-elements is significantly reduced, manufacturing is simplified, numerous assembly steps are eliminated and the required skill level(s) of manufacturing personnel are each significantly reduced. Because numerous prior elements are multi-shot injection molded directly upon one another, the number of pathways between discrete components is reduced, resulting in a connector with fewer environmental seal(s) 31 that may provide improved long term sealing characteristics.

### Table of Parts

| | |
|---|---|
| 1 | bore |
| 3 | coupling body |
| 5 | slip ring |
| 7 | connector body |
| 9 | annular ramp surface |
| 10 | end face |
| 11 | clamp spring |
| 13 | inner contact |
| 15 | dielectric insulator |
| 17 | inner body |
| 19 | connection interface |
| 21 | outer body |
| 23 | tool flat |
| 25 | thread |
| 27 | spring mating surface |
| 29 | slip ring body |
| 31 | environmental seal |
| 33 | sheath seal |
| 35 | annular groove |
| 37 | spring basket |
| 47 | interlock feature |
| 49 | groove |
| 51 | lip |
| 53 | protrusion |
| 54 | mold break point |
| 55 | shoulder |
| 56 | tool flat support |
| 57 | rib |
| 59 | material reduction groove |
| 61 | multi-connector assembly |
| 63 | flange portion |
| 65 | base portion |
| 67 | female connector portion |
| 69 | female bore |
| 71 | male connector portion |
| 73 | male bore |
| 75 | device end |
| 77 | cellular base station antenna |
| 79 | connector end |
| 80 | pin spread space |
| 81 | female pin |
| 83 | female insulator |
| 85 | male insulator |
| 87 | male pin |
| 89 | key slot |
| 91 | key |
| 93 | cut-away section |

Where in the foregoing description reference has been made to ratios, integers or components having known equivalents then such equivalents are herein incorporated as if individually set forth.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus, methods, and illustrative examples shown and described. Accordingly, departures may be made from such details without departure from the spirit or scope of applicant's general inventive concept. Further, it is to be appreciated that improvements and/or modifications may be made thereto without departing from the scope or spirit of the present invention as defined by the following claims.

## Claims

1. A multi-connector assembly, comprising:
a monolithic outer body of metal composition; the outer body provided with a flange portion;
the flange portion provided with a female connector portion and a male connector portion;
the female connector portion provided with a female bore;
the male connector portion provided with a male bore;
a plurality of female pins;
a plurality of male pins;
a female insulator of dielectric polymer molded about the female pins, within the female bore;
a male insulator of dielectric polymer molded about the male pins, within the male bore;
an outer diameter of the female insulator sealing against an inner diameter of the female bore; and
an outer diameter of the male insulator sealing against an inner diameter of the male bore.

2. The dual connector assembly of claim 1, wherein the female connector portion is provided with an interior thread on the inner diameter of the female bore;
the plurality of female pins open to a connector end;
the female insulator provided with a key slot extending inward from an outer diameter of the female insulator;
the male connector portion protruding from the flange portion towards the connector end;
an exterior thread provided around an outer diameter of the male connector portion; and
a key protruding inward from the inner diameter of the male bore.

3. The dual connector assembly of claim 1, further including at least one interlock feature between the inner diameter of the female bore and an outer diameter of the female insulator.

4. The dual connector assembly of claim 1, further including at least one interlock feature between the inner diameter of the male bore and an outer diameter of the male insulator.

5. The dual connector assembly of claim 3, wherein the at least one interlock feature is an annular protrusion projecting radially inward from the inner diameter of the female bore.

6. The dual connector assembly of claim 4, wherein the at least one interlock feature is an annular protrusion projecting radially inward from the inner diameter of the male bore.

7. The dual connector assembly of claim 1, wherein a base portion extends from the flange portion towards a device end of the outer body; and
the base portion is dimensioned to couple as an exterior surface of a cellular base station antenna.

8. The dual connector assembly of claim 1, wherein the metal composition is an alloy comprising zinc and aluminum.

9. A method for manufacturing a multi-shot injection molded dual connector assembly, comprising the steps of:
injection molding a monolithic outer body from an injection moldable metal composition;
the outer body having a flange portion provided with a female connector portion and a male connector portion;
the female connector portion provided with a female bore;
the male connector portion provided with a male bore;
injection molding a female insulator about a plurality of female pins, within the female bore;
injection molding a male insulator about a plurality of male pins within the male bore;
an outer diameter of the female insulator sealing against an inner diameter of the female bore; and
an outer diameter of the male insulator sealing against an inner diameter of the male bore.

10. The method of claim 9, wherein the female connector portion is provided with an interior thread on the inner diameter of the female bore;
the plurality of female pins provided with interconnection cavities open to a connector end;
the female insulator provided with a key slot extending inward from an outer diameter of the female insulator;
the male connector portion protruding from the flange portion towards the connector end;
an exterior thread provided around an outer diameter of the connector portion; and
a key protruding inward from the inner diameter of the bore.

11. The method of claim 9, further including at least one interlock feature between the inner diameter of the female bore and an outer diameter of the female insulator.

12. The method of claim 9, further including at least one interlock feature between the inner diameter of the male bore and an outer diameter of the male insulator.

13. The method of claim 11, wherein the at least one interlock feature is an annular protrusion projecting radially inward from the inner diameter of the female bore.

14. The method of claim 12, wherein the at least one interlock feature is an annular protrusion projecting radially inward from the inner diameter of the male bore.

15. The method of claim 9, wherein a base portion extends from the flange portion towards a device end of the outer body; and
the flange portion is dimensioned to close a bottom end of a cellular base station antenna.
